(19) Europäisches Patentamt
European Patent Office
Office européen des brevets

(11) **EP 3 788 409 B1**

(12) **EUROPEAN PATENT SPECIFICATION**

(45) Date of publication and mention
of the grant of the patent:
**20.03.2024 Bulletin 2024/12**

(21) Application number: **19723996.5**

(22) Date of filing: **01.05.2019**

(51) International Patent Classification (IPC):
*G01V 1/00* *(2024.01)*          *G01V 1/38* *(2006.01)*

(52) Cooperative Patent Classification (CPC):
**G01V 1/006; G01V 1/38; G01V 1/3808;**
**G01V 1/3817; G01V 1/3861;** G01V 2210/1293

(86) International application number:
**PCT/US2019/030196**

(87) International publication number:
**WO 2019/213255 (07.11.2019 Gazette 2019/45)**

(54) **SEISMIC SOURCE OPERATION AT LOW FREQUENCIES**

BETRIEB EINER SEISMISCHEN QUELLE BEI NIEDRIGEN FREQUENZEN

FONCTIONNEMENT DE SOURCE SISMIQUE À BASSES FRÉQUENCES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.05.2018 US 201862666057 P**

(43) Date of publication of application:
**10.03.2021 Bulletin 2021/10**

(73) Proprietor: **TGS-NOPEC Geophysical Company**
**Houston, TX 77041 (US)**

(72) Inventor: **SCHNEIDER, Curt**
**Houston, Texas 77042 (US)**

(74) Representative: **Zacco Norway AS**
**P.O. Box 488 Skøyen**
**0213 Oslo (NO)**

(56) References cited:
**EP-A2- 2 416 179          WO-A1-2016/153353**
**US-A- 4 956 822          US-A1- 2011 211 422**
**US-A9- 2016 097 869**

• **Caldwell Jack ET AL: "A brief overview of seismic**
**air-gun arrays", The Leading Edge, vol. 19, no. 8,**
**1 August 2000 (2000-08-01) , pages 898-902,**
**XP055983197, US ISSN: 1070-485X, DOI:**
**10.1190/1.1438744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS REFERENCE TO RELATED APPLICATIONS

This application claims priority to U.S. Provisional Application No. 62/666,057, filed May 2, 2018, entitled "Low Frequency Seismic Source,".

BACKGROUND

This application relates to geophysical exploration and seismic data acquisition, including seismic source technologies. Applications include, but are not limited to, marine seismic surveys, seismic data acquisition, and geophysical image generation.

In marine seismic exploration, a streamer array is typically towed behind a marine vessel. A series of hydrophones (or pressure sensors) and motion sensors (or accelerometers) are deployed along the streamers, and configured to sense seismic energy propagating through the water column. Alternatively, the sensors can be deployed along oceanbottom cables, or in autonomous seismic sensor nodes distributed on the seabed, or suspended at depth below the surface.

The seismic energy is typically produced by seismic sources configured to generate periodic bursts of seismic energy. The energy propagates down through the water column in the form of acoustic waves, which can penetrate the seafloor to reflect from subsurface structures. The sources can be deployed by the same seismic vessel that tows the streamers, or by designated sourcevessels.

The reflected seismic energy is detected at the seismic sensor locations, in the form of an upward-propagating seismic wavefield. The sensors produce seismic data by sampling the seismic wavefield, and the data are processed to generate seismic images of the underlying structures. Suitable methods of signal conditioning are described in U.S. Patent No. 6,539,308 to Monk et al. and U.S. patent No. 8,830,766 to Lambert et al.. US2011/211422 discloses a method for acquiring seismic data. WO2016/153353 discloses a marine seismic data acquisition system. EP2416179 discloses a method for determining deghosted marine seismic energy source wavefield from signal recordings of seismic data.

SUMMARY

This application is directed to a seismic source system configured for operation at low frequencies, according to claim 1, and methods of operation thereof, according to claim 9, as described herein.

BRIEF DESCRIPTION OF THE DRAWINGS

FIG. 1 is a schematic illustration of a representative marine seismic survey in accordance with embodiments of the disclosure.
FIG. 2 is a plot illustrating zero hertz receiver ghost notch at different cable depths in accordance with embodiments of the disclosure.
FIG. 3 is an isometric view of a low-frequency seismic source in accordance with embodiments of the disclosure.
FIGS. 4A-4C include various views of a cluster source assembly in accordance with embodiments of the disclosure.
FIG. 5 is a schematic illustration of a first towing configuration for low-frequency seismic sources in accordance with embodiments of the disclosure.
FIG. 6 is a schematic illustration of a second towing configuration for low-frequency seismic sources in accordance with embodiments of the disclosure.
FIG. 7 is a two-dimensional view showing a physical arrangement of seismic sources in a survey system, in accordance with embodiments of the disclosure.

DETAILED DESCRIPTION

In this disclosure, reference is made to examples and embodiments of the invention. It should be understood that the claims are not limited to these specifically described examples.

Although the various features of the invention may provide certain advantages over the prior art, and over other possible solutions to the problems addressed herein, whether or not such advantages are achieved does not limit the invention to a given embodiment. The following aspects, features and advantages of the invention are merely illustrative, and are not to be construed as features or limitations of the claims, except where explicitly recited therein. References to "the invention" shall not be construed as a generalization of any of the subject matter that is disclosed, and do not limit the claims except where the relevant features are expressly stated.

NOISE

Noise is a substantial consideration in seismic surveys. Noise sources include swell noise and wave noise from the sea surface, and towing noise generated by the streamer cables traveling through the water column. Noise propagates both through the water column, and also along the streamers.

Noise contributions can sometimes be reduced with a combination of temporal and spatial filtering. Temporal filtering is accomplished by discrete digital sampling of the sensor signals, and weighting the samples acquired as a function of time. Analog filters can be used to prevent aliasing of signals at frequencies greater than half the sample rate.

Spatial samples are typically formed by group-summing individual sensor outputs, so that noise propagating along the length of the streamer is attenuated. Noise components that propagate orthogonal to the streamer axis, however, may not be affected.

The acoustic impedance $\rho c$ is the product of the density $\rho$ of the water column (or other acoustic medium), and the speed c of acoustic wave propagation in the medium. Acoustic energy reflects when there is a change in the impedance, not only due to the subsurface structures but also when the sound waves encounter the water/air interface along the upper surface boundary, and at the ocean bottom. Energy that is not reflected is transmitted (or refracted) beyond the boundary, as defined between the two regions of different acoustic impedance.

Acoustic waves propagate through water and other media in the form of pressure waves or compression waves, which induce particle motion in the direction of propagation. At a planar interface between two different homogenous media, the acoustic waves reflect at an angle equal to the angle of incidence $\theta_1$, and refract at angle $\theta_2$ given by

$$\sin \theta_2 = c_2 \sin \theta_1 / c_1$$

[1]

as defined for acoustic waves travelling from a first medium (1) with propagation velocity $c_1$ to a second medium (2) with propagation velocity $c_2$. If the incident angle $\theta_1$ is zero, then the reflected energy propagates back through the first medium along the same incident path, and the refracted waves propagate forward through the second medium at angle $\theta_2 = 0$.

For an incident angle $\theta_1$ of zero and no conversion to shear energy, the reflection coefficient is:

$$R_{pp} = \frac{p_2 c_2 - p_1 c_1}{p_2 c_2 + p_1 c_1}$$

[2]

The sea surface can be a near perfect reflector of sound energy, with a reflection coefficient of approximately 1 at the water-air interface ($R_{pp} \approx 1$). After reflecting from the seafloor and subsurface structures of interest, the acoustic energy thus propagates upward through the water column to the surface, and reflects back again down toward the sensors.

The sensors detect a ghost response from the downward-propagating acoustic waves reflected from the sea surface. The "ghost" signal arrives delayed in time from the upward-propagating wavefield, and is reversed in polarity. The downward-propagating ghost wave adds to the upward-propagating signal, affecting reconstruction of the seismic image. The ghost reflection can also travel back down to the seafloor (or other interface), and then reflect back upward to produce additional reflected signals, commonly referred to as multiples.

For a vertically traveling pressure wave, the ghost produces one or more "notches" in the frequency spectrum. In some examples, a notch may be produced at a zero hertz frequency. The zero-hertz notch location may be fixed independent of streamer depth. In addition, the ghost may further produce one or more additional notches in the frequency spectrum based on streamer depth. For example, the ghost may produce a notch at a frequency $f_{notch} = c/2d$, where c is the acoustic velocity and d is the streamer depth. For typical streamer depths d on the order of 10 m, the notch frequency is $f_{notch} \sim 75$ Hz; thus, a frequency response extending beyond about 100 Hz can be required for high-quality seismic image resolution.

Because the notch frequency is inversely proportional to the tow depth, streamers can be towed at shallower depths to improve resolution. Shallow depths can problematic, however, due to noise from the sea surface interfering with the seismic signal. These effects may worsen as the weather deteriorates, sometimes causing the crew to discontinue operations until conditions improve. Reducing ghost-notch effects enables towing at greater depths, farther from surface disturbances.

Ocean bottom systems can reject ghosts and multiples by a technique commonly known as p-z summation. In an acoustic wave, the pressure $p$ is a scalar, while the particle velocity u is a vector quantity. A hydrophone with positive omni-directional response records the seismic acoustic wave pressure $p$, and a geophone or accelerometer records the velocity u, including the vertical component $u_z$, which has a positive response to up-going signals and a negative response to down-going signals.

In p-z summation, the velocity signal is scaled by the acoustic impedance $\rho c$ of the seawater (or other acoustic medium), and added to the pressure signal. A single-axis sensor can also be used, e.g., by scaling to account for the change in sensitivity due to the off-axis arrival direction of the signal. For example, an accelerometer output signal can be integrated to obtain the velocity, or the hydrophone signal can be differentiated to spectrally match the accelerometer. This produces a compound sensor design, with full response to the upward-traveling wave and at least a partially muted response to the downward-traveling wave, in order to reject ghosts and multiples.

Techniques like p-z summation can also be applied to towed-streamer acquisition, allowing for greater tow depths with less interference from ghost-notch reflections. Streamers, however, can also experience acceleration due to towing and sea surface effects. These effects may be substantial compared to the acceleration signal from the reflected seismic wavefield, and may fall into the same spectral band of interest, along with the desired reflection response.

The towing speed of the streamer can also be perturbed when the tow vessel encounters ocean waves, which typically introduce a yawing motion as well. Much of the vessel's acceleration energy can be attenuated by deploying the streamers with elastic tow lines, but some of the energy can still be transmitted along the streamer cables, producing noise contributions in the seismic data.

Performance of a particle-velocity measuring system should be near the ambient noise limits. The acceleration (a) due to a planar pressure wave (e.g., from a reflected seismic signal) can be given by:

$$a = \frac{p \times 2\pi f}{z},$$

[3]

where $p$ is the acoustic sound pressure level, f is the frequency, and Z is the acoustic impedance of the medium. The presence of secondary peaks in the acceleration signal indicates that, in some cases, the cable dynamic motion can be greater than the seismic signal to be measured. While this problem has been identified in the prior art, there remains a need for improved seismic survey techniques that produce high-fidelity sampling of the reflected seismic wavefield, with good signal-to-noise ratio down to the lowest frequencies of interest.

SEISMIC SURVEYS

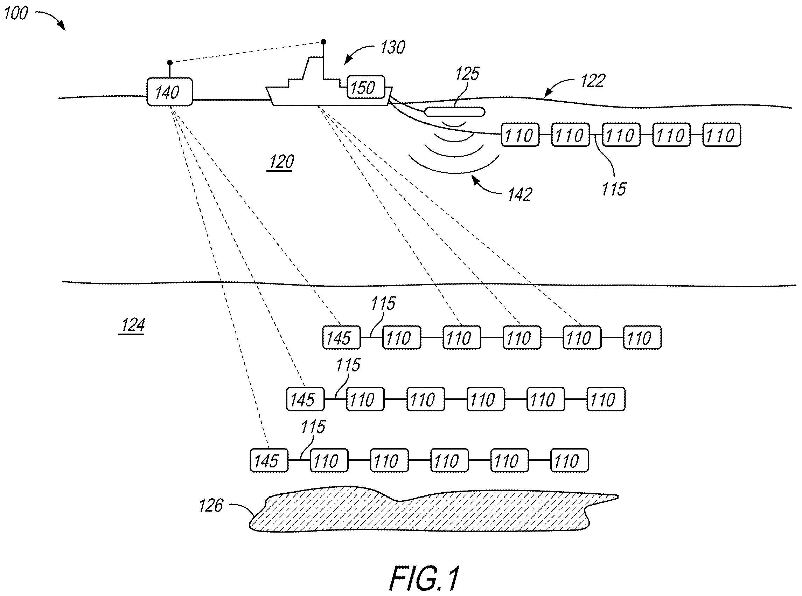

FIG. 1 is a schematic illustration of a representative seismic survey (or survey system) 100, including an array of seismic receivers or autonomous nodes 110 deployed to a water column 120 along one or more ropes or cables 115. Water column 120 extends from a top surface 122 to the ocean floor or other bottom surface 124, e.g., above a petroleum reservoir or other subsurface structure 126 of interest.

A seismic source (or source array) 125 configured for operation at low frequencies can be deployed behind seismic vessel 130, as described herein, either alone or in combination with an array of receivers 110 disposed along one or more towed cables, streamers or node lines 115, using a suitably adapted seismic survey deployment system 150. Suitable seismic vessels 130 can also be configured to deploy receivers 110 to the seabed or other bottom surface 124, e.g., with receivers 110 distributed along one or more ocean-bottom cables 115 disposed above a reservoir or other subsurface structure 126.

Receivers 110 can also be suspended at depth within water column 120, between top surface 122 and the ocean floor or seabed 124, or a combination of ocean bottom cables 115, towed receivers 110 and suspended receivers 110 can be deployed. A combination of manned, unmanned or autonomous vessels 130 can also be used for deployment, service, and recovery of the receivers 110 and sources 125, in either surface or submersible configurations. For example, a remote operated vessel or remote operated underwater vessel (ROV) may be used.

Seismic receivers and nodes 110 can be configured for communications while deployed in water column 120, for example via a termination device or transponder145 deployed along cable 115, with either a wired or wireless (e.g., acoustic, inductive or capacitive) data connection to a seismic hub or buoy system 140. Wireless data communications can also be provided directly between individual receivers 110 and the seismic vessel 130, and between the seismic vessel 130 and one or more hub devices 140, e.g., with a global positioning satellite (GPS) system or other navigational system to determine location and timing data for receives 110. A suitably configured hub 140 or "master" node station/transponder 145 can also be provided with a high precision master clock, in order to synchronize timing information for the seismic receivers 110 disposed in the seismic array or survey system 100.

Seismic cables 115 encompass towed streamer, ocean bottom cable, and suspended cable embodiments, and suitable marine-based seismic system configurations may also include autonomous receivers or nodes 110. While references are made to a sea floor or seabed 124, moreover, in practice the claims are not limited to any particular body of water or other seismic medium 120. Rather, receivers 110 and source systems 125 may be deployed to any water or marine environment, including oceans, lakes, rivers, etc., and in other land-based or water-based seismic applications. Accordingly, use of the terms sea, seabed, sea floor, and the like should be broadly understood to encompass all bodies of water and all other seismic media 120, including subsurface, marine and land-based surfaces 124 suitable for deployment of seismic receivers 110 adapted to detect propagating seismic energy produced by low-frequency seismic sources 125.

One or more sources 125 can be configured to operate independently, or to emit seismic energy in a coordinated fashion at substantially the same time; e.g., according to a simultaneous source regime. Depending on embodiment, each source apparatus 125 may include one or more seismic source components configured to generate the seismic energy at low frequencies, as described herein, so that the seismic wavefield propagates through water column or other medium 120 in the form of acoustic waves 142.

For example, an air gun array or subarray 125 can be configured to generate acoustic waves 142 by emitting controlled blasts of compressed air, or other pneumatic, mechanical or electromechanical source components 125 can be used. A portion of the seismic waves 142 propagates down through water column 120 to penetrate the seabed 124, and reflects from a petroleum reservoir or other subsurface geological structure of interest 126. A portion of the reflected seismic energy propagates back up to the seismic receives 110 deployed along the seabed 124, or within the water column 120.

Reflections can also occur at top surface 122 and bottom surface 124 of water column 120, resulting in a combination of upward-propagating and downward-going seismic wavefield components. Deghosting can be applied to the resulting seismicdata acquired by receivers 110, in order to improve image quality and resolution for geophysical exploration of the subsurface layers and other relevant geological structures 126.

SOURCE PERFORMANCE

For airgun source systems, the bubble period $T$ of a single element can be represented by:

$$T = \frac{(P \times V)^{1/3}}{C \times (P_0)^{S/6}}$$

[4]

where C is a constant parameter, e.g., according to the Rayleigh-Willis formula. The fundamental frequency F of a single-gun source can be represented by:

$$F = \frac{C \times (P_0)^{S/6}}{(P \times V)^{1/3}}.$$

[5]

Where low frequency F or high period Tare desired, or both, this implies or can be achieved by selecting suitable operational parameters including, but not limited to, high charge pressure $P_0$ and large gun volume V, and operation of the source at shallow depths. However, the zero hertz notch can limit the effectiveness of this approach, and should be addressed to achieve the performance improvement attainable by selecting suitable values of the pressure and volume parameters, as described in the equations, and other operational parameters of the source. For example, large volume sources may be operated in a high pressure, tri-cluster design, at suitable depth in the watercolumn. Thus, a high pressure, high volume, single or multiple-source apparatus can be operated at suitable depth, in order to achieve desired results as described herein.

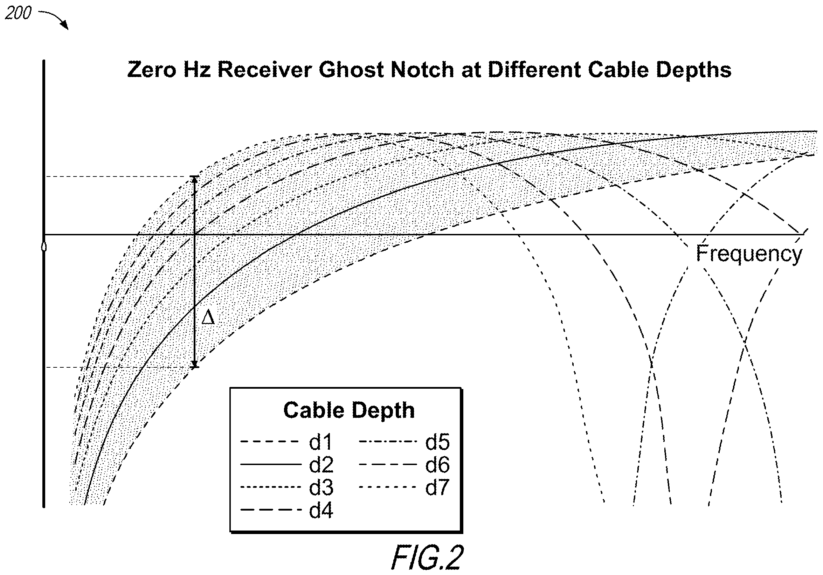

FIG. 2 is a plot 200 illustrating zero hertz receiver ghost notch at different cable depths. For example, the depths may range from about 10 m to about 40 m, and the frequencies may range from about 0 to about 25 Hz. Depending on configuration, there may be an attenuation $\Delta$ of about 10 dB or more between the different depths.

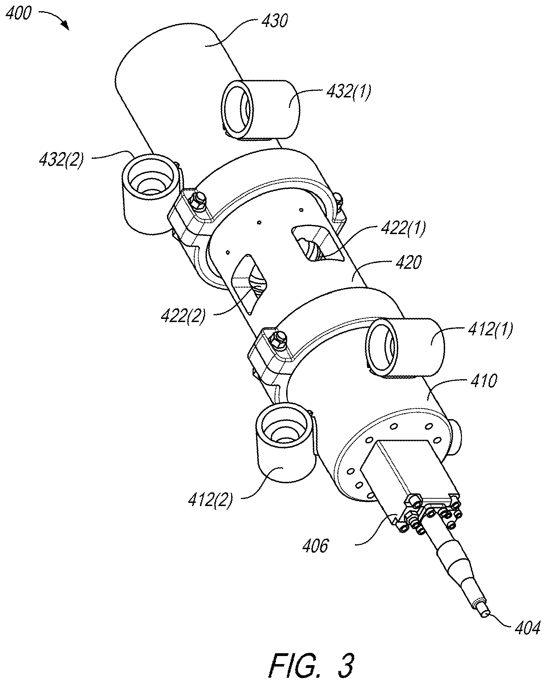

FIG. 3 is an isometric view of a seismic source device 400 in accordance with some embodiments of the disclosure. The low-frequency source 125 of FIG. 1 may implement the seismic source 400 in some embodiments. Depending on embodiment, the seismic source 400 may be provided by a commercial vendor such as BOLT Technology Corporation of Norwalk, Connecticut, and modified for low frequency operation by selection of relevant operating parameters as described herein.

Suitable seismic source devices 400 may comprise a double ear large volume air gun or other suitable seismic source device configuration, and may include one or more of an inlet port 404, a solenoid valve assembly 406, fire chamber 410, a main housing 420 with outlet ports 422(1)-(2), a reservoir chamber 430, mounts 412(1)-(2) and 432(1)-(2) for a cluster source assembly. The seismic source device 400 may further include an O-ring, seal, and hex nut or other mechanical fattener components. A shuttle flange can be provided, e.g., with an O-ring groove, in combination with a seal (shaft retainer), sleeve liner, seal support ring, spring, spring holder, and suitable orifice. The fire chamber can be provided as a gland type, solid design, and/or with a radiused,
threaded shaft shuttle and shuttle bearing. These design options are merely representative, and vary from embodiment to embodiment. In some examples, the reservoir chamber 430 may have a volume up to approximately 2000 cu in (1 cu in = 16,3871 cm$^3$) In some examples, the reservoir chamber 430 may have a volume up to approximately 6000cu. in. It is appreciated that, assuming a common target pressure (e.g., 2000 PSI (1 PSI = 6,89476 kPa) or another target pressure) and a common refill air compressor capacity, a size of the reservoir chamber 430 may affect a time to refill the reservoir chamber 430 to the common pressure for a subsequent fire of the seismic source device 400. That is, using a common air compressor, it may take less time to refill a seismic source device 400 with a reservoir chamber 430 volume of 2000 cu. in. to a common pressure than it takes to fill a seismic source device 400 having a reservoir chamber 430 volume of 6000 cu. in. to the common target pressure. Thus, a maximum firing frequency of the seismic source device 400 may be dependent on the reservoir chamber 430 volume.

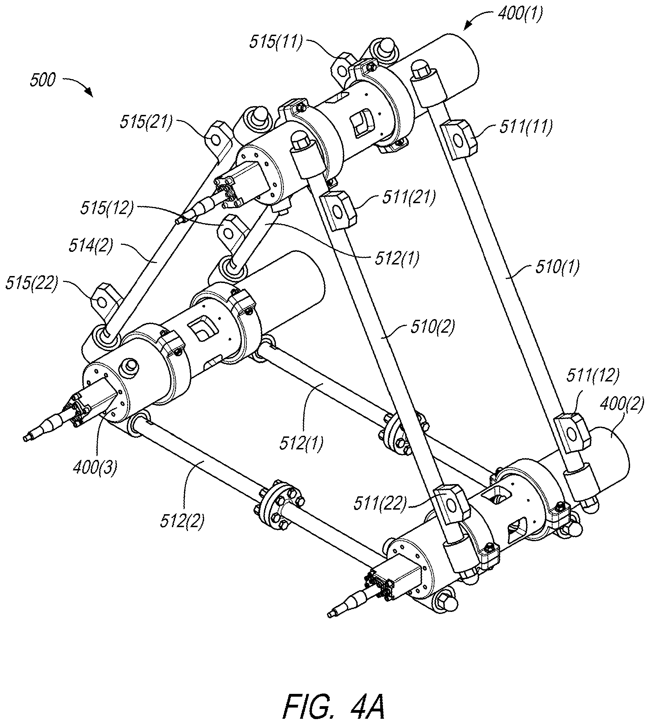

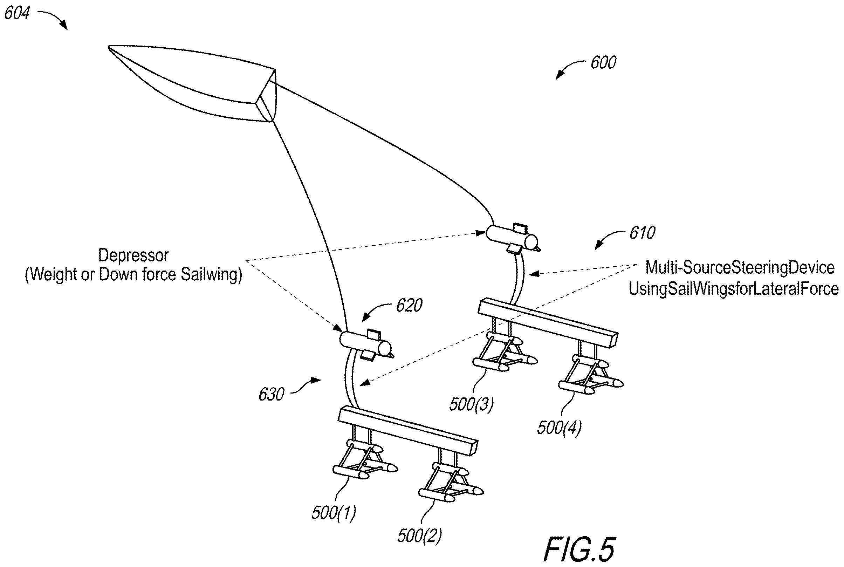

FIGS. 4A-4C include various views of a cluster source assembly 500, including seismic source devices 400(1)-(3), in accordance with some embodiments of the disclosure. FIG. 5A is an isometric view of the cluster source assembly 500, FIG. 5B is a side view of the tri-cluster source assembly 500, and FIG. 5C is an end view of the cluster source assembly 500.

FIGS. 4A-4C may include elements that have been previously described with respect to the seismic source device 400 of FIG. 3. Those elements have been identified in FIGS. 4A-4C using the same reference numbers used in FIG. 3 and operation of the common elements is as previously described. Consequently, a detailed description of the operation of these particular elements will not be repeated in the interest of brevity.

Depending on embodiment, the cluster source assembly 500 may include one or more long life air guns or other seismic source devices 400(1)-(3), one or more spreader bar kits 510(1)-(2) and 514(1)-(2) with or without tow fixtures or "ears" 511(11)-(22) and 515(11)-(22), and one or more spreader bar kits 512(1)-(2); e.g., for the cluster source assembly 500. While the cluster source assembly 500 is shown with three seismic source devices 400(1)-(3), the cluster source assembly 500 may include additional seismic source devices 400 without departing from the scope of the disclosure. Suitable suppliers include BOLT Technology of Norwalk, Connecticut, where the operational parameters of the seismic source devices 400(1)-(3) are modified and selected for seismic source operation at low frequencies, as described herein. A synchronizer may also be provided to synchronize firing of the seismic source devices 400(1)-(3), with suitable tow lines and umbilical lines for deploying and suppling compressed air to the seismic source devices 400(1)-(3). The outlet ports of the seismic sources 400(1)-(3) are oriented in different directions from one another such that the air bubbles generated when the seismic sources 400(1)-(3) are fired (e.g., activated) travel in different directions and do not merge or frequency-lock. The seismic source devices 400(1)-(3) fire contemporaneously. Thus, a first of the seismic source devices seismic source devices 400(1)-(3) emits seismic energy by generation of a first air bubble in the seismic medium in a first direction at a specified time, and a second of the seismic source devices 400(1)-(3) spaced a predefined distance from the first of the seismic source devices 400(1)-(3) emits seismic energy by generation of a second air bubble in the seismic medium in a second direction at the specified time that is different than the first direction. Additionally, a third of the seismic source devices 400(1)-(3) spaced a defined distance from each of the first and second of the seismic source devices 400(1)-(3) may emit seismic energy by generation of a third air bubble in the seismic medium in a third direction at the specified time that is different than the first direction and different than the second direction. The seismic energy has a low frequency characteristic (e.g., may have a frequency that is less than a predefined frequency). The first air bubble may be spaced from the second and third air bubbles without frequency locking, while generating the seismic energy in the seismic medium. The first, second, and third air bubbles may collapse to generate the seismic energy in the form of a seismic wavefield propagating through the seismic medium.

The defined distances between the seismic source devices 410(1)-(3) may be selected to reduce ghosting effects and/or zero-hertz notch effects in the seismic wavefield. Further, the seismic source devices 410(1)-(3) may be oriented relative to one another to reduce ghosting effects in seismic wavefield. In some examples, the defined distance, a relative orientation between the seismic source devices 410(1)-3, and the low frequency characteristic may be selected based on one or more of charge pressureP0, gun volume V, and operation of the source at a selected depth.

FIG. 5 is a schematic illustration of a first representative towing configuration 600 for cluster source assemblies 500(1)-(4) as described herein. FIG. 5 may include elements that have been previously described with respect to the cluster source assembly 500 of FIGS. 4A-4C. Those elements have been identified in FIG. 5 using the same reference numbers used in FIGS. 4A-4C and operation of the common elements is as previously described.

As shown in FIG. 5, the cluster source assemblies 500(1)-(4) are deployed in one or more source subarrays 610, e.g., deployed using a depressor, ballast (weight) system or downforce foil 620 and one or more steering foils 630, e.g., using one or more "SailWing" type or other steerable foil devices as described in U.S. Patent No. 9,632,195, International patent application PCT/US2016/057344 (WO 2017/066762), U.S. Patent Application No. 14/959,009 (Publication No. 2016/0161622), and International patent application PCT/IB2017/000209 (WO 2017/141111). The towing configuration 600 is shown in FIG. 5 as being towed by a vessel 604.

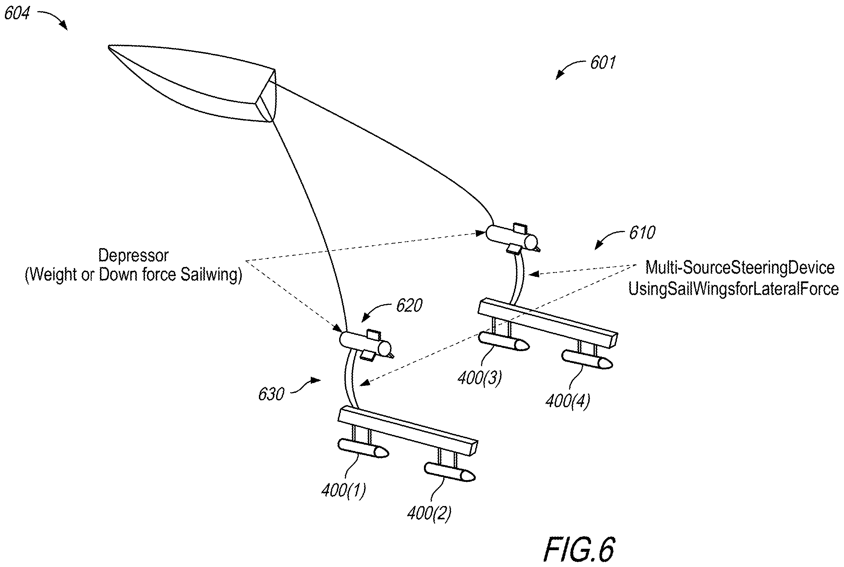

FIG. 6 is a schematic illustration of a second representative towing configuration 601 for seismic source devices 400(1)-(4) as described herein. FIG. 6 may include elements that have been previously described with respect to the seismic source device 400 of FIG. 3 and with respect to the first representative towing configuration 600 of FIG. 5. Those elements have been identified in FIG. 6 using the same reference numbers used in FIG. 3 or FIG. 5 and operation of the common elements is as previously described.

As shown in FIG. 6, the seismic source devices 400(1)-(4) are deployed in one or more source subarrays 610, e.g., deployed using a depressor, ballast (weight) system or downforce foil 620 and one or more steering foils 630. The towing configuration 601 is shown in FIG. 6 as being towed by a vessel 604. In some examples, the seismic source devices 400(1)-(4) may have a volume up to approximately 6000 cu. in. when towed in the second representative towing configuration 601.

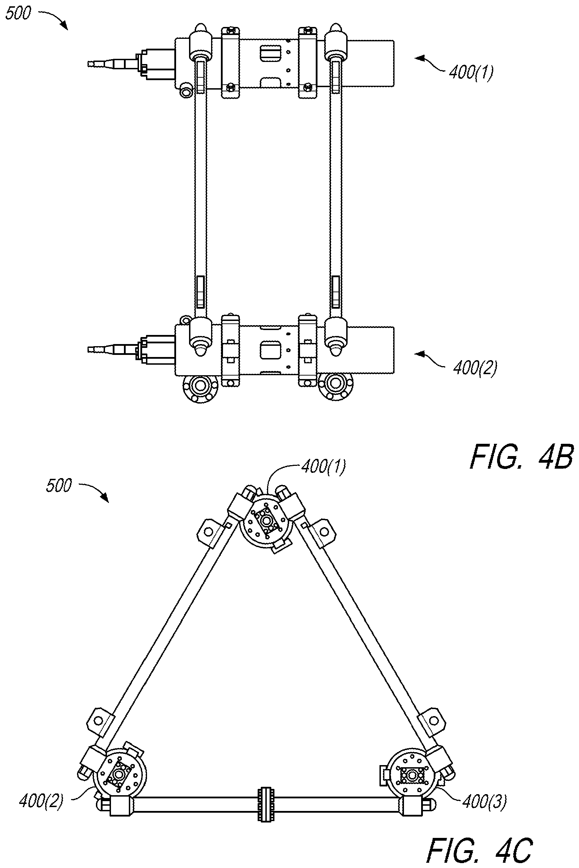

In some examples, the source 125 of FIG. 1, the seismic source device 400 of Figure 4, the cluster source assembly 500 of FIGS. 4A-4C, the cluster source assemblies 500(1)-(4) of FIG. 5, and/or the seismic source devices 400(1)-(4) of FIG. 6 may be deployed in a vertical orientation, e.g., at or near the water/air interface (e.g., interface defining the surface 122 of the water column 120, as shown in FIG. 1).

The described method for testing at low frequencies (e.g., 1 to 4 Hz) may improve velocity model building using full waveform inversion (FWI). The improvement in velocity model building using FWI may include using the Rayleigh-Willis equation, using a deep tow implementation to take advantage of constructive ghost energy, increase signal-to-noise ratio by firing the sources or airguns more frequently, simplifying source arrays for improved low frequency energy, or any combination of elements above.

One potential limitation in using the previously discussed Rayleigh-Willis formula to select frequency, depth, and time parameters for an airgun source arrangement and firing in a seismic sensing system is that the resulting peak bubble frequency may be limited to approximately 3.5 Hz or 285 milliseconds. As previously discussed, towing the airguns deep may result in low frequency uplift based on a depth of towing the airguns, which may provide a notched frequency spectrum with a lowest frequency lobe in a range of 1-5 Hz. However, in some embodiments, the system may be configured to create pulses on top of the base spectrum to provide additional uplift in discrete frequencies.

For example, the system may include multiple airguns located physically proximate to one another, each individual airgun may sequentially fire at constant intervals as part of a single firing sequence. As each gun fires at the constant interval, the resulting spike will synthesize with frequencies of signals generated from the single gun spectrum. That is, the firing of multiple airguns at the constant intervals may result in an uplift to the discrete frequency defined by the constant interval. In some examples, the uplift may be 10 dB or more. The constant interval/frequency may be 1 second/1 Hz, 2 seconds/0.5 Hz, or another constant interval/frequency. Using multiple airguns pulsed at constant intervals may synthesize an extended time delay between pulses and bypass a bubble period derived from the Rayleigh-Willis formula. It is appreciated that a maximum firing frequency of a single air gun may be dependent on a reservoir chamber volume, as a refill/recovery time between consecutive firings is based on the reservoir chamber volume. Thus, a tow speed and time between consecutive firing sequences may be dependent on the maximum firing frequency of a single airgun. The single airguns may be towed at depths from 0 to 150 meters.

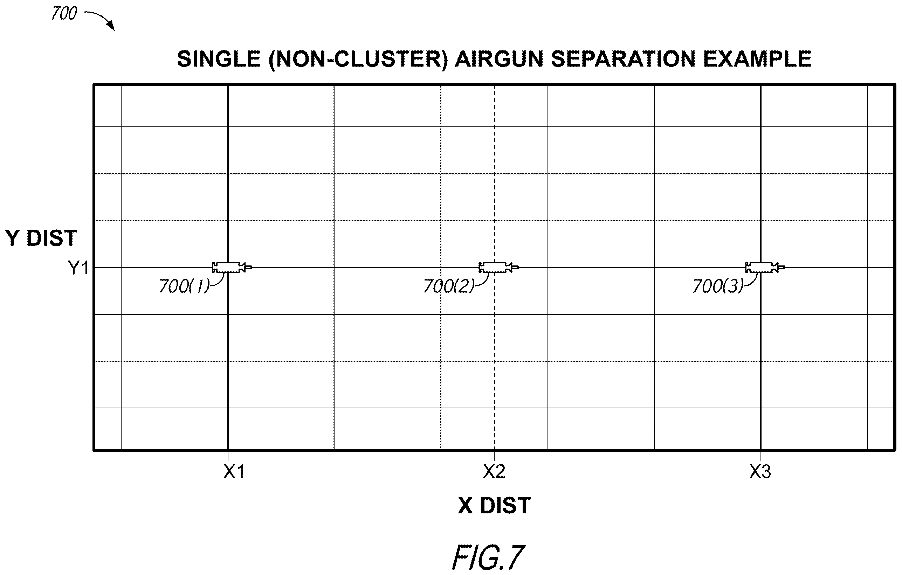

FIG. 7 a two-dimensional view of a physical arrangement of seismic sources 700(1)-(3) of a survey system 700, in accordance with embodiments of the disclosure, additional airguns may be included without departing from the scope of the disclosure. In some examples, each of the seismic sources 700(1)-(3) may implement the source 125 of FIG. 1 , the seismic source device 400 of Figure 4, the cluster source assembly 500 of FIGS. 4A-4C, one of the cluster source assemblies 500(1)-(4) of FIG. 5, the seismic source devices 400(1)-(4) of FIG. 6, or any combination thereof). In the plot 700, the first seismic source 700(1) is located at X-Y coordinate X1,Y1, the second seismic source 700(2) located at X-Y coordinate X2,Y1; and the third seismic source 700(3) located at X-Y coordinate X3,Y1.

While FIG. 7 depicts the system 700 having three seismic sources 700(1)-(3), more than three seismic sources may be included without departing from the scope of the disclosure. The seismic sources 700(1)-(3) may be spaced apart at predefined distances.

In some examples, the distance between X1 and X2 is equal to a distance between X2 and X3. In other examples, the X1-X2 distance is different than the X2-X3 difference. For example, the seismic sources 700(1)-(3) may be spaced apart anywhere from 1 to 10 meters. In some examples, the seismic sources 700(1)-(3) may be spaced apart at a distance of 5 meters.

The physical arrangement may vary from depicted without departing from the scope of the disclosure. For example, rather than being arranged in a line in the X direction, the seismic sources 700(1)-(3) may be arranged in a line in the Y direction, or may be arranged to form vertices of a triangle (or other shape when more than three seismic sources are included in the system 700).

The seismic sources 700(1)-(3) may operate at any pressure from 1000 to 3000 PSI. In some examples, the seismic sources 700(1)-(3) may operate at approximately 2000 PSI. The outlet ports of the seismic sources 700(1)-(3) may be oriented in the same direction, in some examples, or in different directions, in other examples.

The seismic sources 700(1)-(3) may be configured to pulse at constant intervals. For example, the seismic sources 700(1)-(3) may be configured to pulse relative to one another at predetermined, constant time intervals, such as 1 second intervals or 2 second intervals. For example, the seismic source 700(1) may pulse at a first time, the seismic source 700(2) may pulse at a second time that is one predetermined time interval after the first time, and the seismic source 700(3) may pulse at a third time that is one predetermined time interval after the second time. The sequence may start to repeat with a pulse from the seismic source 700(1) at a fourth time that is one predetermined time interval after the third time. The seismic sources 700(1)-(3) may be configured to pulse at other intervals without departing from the scope of the disclosure.

In some examples, the seismic sources 700(1)-(3) may each emit separate air pulse signals (e.g., bubbles) at a given depth. In an example, each of the air pulse signals include 1 second time delay, 1 Hz pulses at a 10 meter depth. In another example, each of the air pulse signals include 1 second time delay, 1 Hz pulses at a 130 meter depth. In yet another example, each of the air pulse signals include 2 second time delay, 0.5 Hz pulses at a 10 meter depth or at a 130 meter depth. While the embodiments of the system 700 described with respect to FIG. 7 include 3 seismic sources 700(1)-(3), more or fewer sources such as airguns may be included without departing from the scope of the disclosure. For example, the system 700 may include 4,5,6, or more seismic sources. Using multiple seismic sources pulsed at constant intervals may synthesize an extended time delay between pulses and bypass a bubble period derived from the Rayleigh-Willis formula. This may provide modulated pulses on top of (e.g., or convolved with) pulses of a single gun spectrum.

In some examples, a first of the seismic sources 700(1)-(3) may emit seismic energy by generation of a first air bubble into the seismic medium at a first time, a second of the seismic sources 700(1)-(3) may emit seismic energy by generation of a second air bubble into the seismic medium at a second time after the first time, and a third of the seismic sources 700(1)-(3) may emit seismic energy by generation of a third air bubble into the seismic medium at a third time after the second time. The seismic energy may have a low frequency characteristic (e.g., have a frequency that is less than a predefined frequency). The first, second, and third air bubbles may be spaced apart without frequency locking, while generating the seismic energy in the seismic medium. In some examples, the first, second, and third air bubbles may form a seismic wavefield. In some examples, a time period between the first time, the second time, and the third time may be selected based on the predefined distance, the seismic medium, and a volume of the first, second, and third air bubbles. A predefined distance and/or the time period between the seismic sources 700(1)-(3) may be selected to reduce ghosting effects or zero-hertz notch in the seismic wavefield. The predefined distance, the time period, and the low frequency characteristic may all selected based on one or more of charge pressure P0, gun volume V, and operation of the source at a selected depth.

## Claims

1. A system, comprising:

   a first seismic source (400(1)-(3)) configured to emit seismic energy by generation of a first air bubble into the seismic medium in a first direction at a first time; and
   a second seismic source (400(1)-(3)) spaced a predefined distance from the first seismic source, the second seismic source configured to emit seismic energy by generation of a second air bubble into the seismic medium in a second direction at a second time after the first time, wherein the first direction is different than the second direction, wherein outlet ports of the first and second seismic source are oriented in different directions from one another, wherein the seismic energy emitted by the first and second seismic sources has a low frequency characteristic, wherein a time period between the first time and the second time is selected based on the predefined distance, the seismic medium, and a volume of the first and second air bubbles.

2. The system of claim 1, wherein the first air bubble is spaced from the second air bubble without frequency locking, while generating the seismic energy in the seismic medium and/or wherein the first air bubble and the second air bubble form a seismic wavefield.

3. The system of claim 1, wherein the low frequency characteristic is a frequency that is less than a predefined frequency and/or wherein the seismic medium is a water column.

4. The system of claim 1 , further comprising a third seismic source spaced the predefined distance from the first seismic source and the second seismic source, the third seismic source configured to emit seismic energy by generation of a third air bubble into the seismic medium in a third direction at a third time after the second time, wherein the third direction is different than the first direction and different than the second direction, wherein outlet ports of the first, second and third seismic source are oriented in different directions from one another.

5. The system of claim 4, wherein a time between the first time and the second time is equal to a time period, wherein a time between the second time and the third time is equal to the time period, optionally wherein: the first air bubble, the second air bubble, and the third air bubble form a seismic wavefield, wherein the time period is selected to reduce ghosting effects in the seismic wavefield; and/or the predefined distance, the time period, and the low frequency characteristic are selected based on one or more of charge pressure PO, gun volume V, and operation of the source at a selected depth.

6. The system of claim 4, wherein the first air bubble, the second air bubble, and the third air bubble form a seismic wavefield, wherein the predefined distance, the time period, and the low frequency characteristic are selected to reduce zero-hertz notch effects in the seismic wavefield.

7. The system of claim 1, wherein the predefined distance is selected to reduce ghosting effects in the seismic wavefield.

8. The system of claim 1, wherein the first seismic source is configured to be deployed to a same depth within the seismic medium as the second seismic source.

9. A method, comprising:

causing a first seismic source (400(1)-(3)) to emit seismic energy by generation of a first air bubble into the seismic medium in a first direction at a first time; and
causing a second seismic source (400(1)-(3)) to emit seismic energy by generation of a second air bubble into the seismic medium in a second direction at a second time after the first time, wherein the first direction is different than the second direction, wherein outlet ports of the first and second seismic source are oriented in different directions from one another, wherein the second seismic source is spaced apart from the first seismic source a predefined distance, wherein the seismic energy has a low frequency characteristic, wherein a time period between the first time and the second time is selected based on the predefined distance, the seismic medium, and a volume of the first and second air bubbles.

10. The method of claim 9, wherein the first air bubble is spaced from the second air bubble without frequency locking, while generating the seismic energy in the seismic medium.

11. The method of claim 9, wherein the first air bubble and the second air bubble form a seismic wavefield optionally further comprising: selecting the predefined distance between the first seismic source and the second seismic source to reduce ghosting effects in the seismic wavefield; and/or selecting a time period between the first time and the second time, the predefined distance, and the low frequency characteristic to reduce ghosting effects in the seismicwavefield; and/or selecting the predefined distance a time period between the first time and the second time, and the low frequency characteristic to reduce zero-hertz notch effects in the seismic wavefield.

12. The method of claim 9, further comprising delaying emission of the second air bubble from the second seismic source by a predefined time period from the first time to the second time, wherein the time period is equal to a time difference between the first time and the second time.

13. The method of claim 9 wherein the low frequency characteristic is a frequency that is less than a predefined frequency and/or wherein the seismic medium is a water column.

14. The method of claim 9, further comprising causing a third seismic source to emit seismic energy by generation of a third air bubble into the seismic medium at a third time after the second time, wherein the third seismic source is spaced at least the predefined distance from both the first seismic source and the second seismic source.

15. The method of claim 9, further comprising selecting the predefined distance, a time period between the first time and the second time, and the low frequency characteristic based on one or more of charge pressure PO, gun volume V, and operation of the source at a selected depth, further comprising deploying the first and second seismic sources in the seismic medium at a specified depth.

**Patentansprüche**

1. System, Folgendes umfassend:

   eine erste seismische Quelle (400(1)-(3)), die dazu konfiguriert ist, seismische Energie durch Generieren einer ersten Luftblase in das seismische Medium in eine erste Richtung zu einem ersten Zeitpunkt abzugeben; und eine zweite seismische Quelle (400(1)-(3)), die in einem vorbestimmten Abstand zur ersten seismischen Quelle beabstandet ist, wobei die zweite seismische Quelle dazu konfiguriert ist, seismische Energie durch Generieren einer zweiten Luftblase in das seismische Medium in eine zweite Richtung zu einem zweiten Zeitpunkt nach dem ersten Zeitpunkt abzugeben, wobei sich die erste Richtung von der zweiten Richtung unterscheidet, wobei Auslassöffnungen der ersten und der zweiten seismischen Quelle in voneinander unterschiedliche Richtungen gerichtet sind, wobei die seismische Energie, die von der ersten und der zweiten seismischen Quelle abgegeben wird, eine Niederfrequenz-Charakteristik aufweist, wobei ein Zeitraum zwischen dem ersten Zeitpunkt und dem zweiten Zeitpunkt basierend auf dem vorbestimmten Abstand, dem seismischen Medium und einem Volumen der ersten und der zweiten Luftblase gewählt wird.

2. System nach Anspruch 1, wobei die erste Luftblase von der zweiten Luftblase ohne Frequenzsynchronisation beabstandet ist, während die seismische Energie im seismischen Medium generiert wird und/oder wobei die erste Luftblase und die zweite Luftblase ein seismisches Wellenfeld bilden.

3. System nach Anspruch 1, wobei die Niederfrequenz-Charakteristik eine Frequenz ist, die geringer ist als eine vorbestimmte Frequenz und/oder wobei das seismische Medium eine Wassersäule ist.

4. System nach Anspruch 1, ferner umfassend eine dritte seismische Quelle, die mit dem vorbestimmten Abstand von der ersten seismischen Quelle und der zweiten seismischen Quelle beabstandet ist, wobei die dritte seismische Quelle dazu konfiguriert ist, seismische Energie abzugeben, indem eine dritte Luftblase in das seismische Medium in eine dritte Richtung zu einem dritten Zeitpunkt nach dem zweiten Zeitpunkt generiert wird, wobei die dritte Richtung sich von der ersten Richtung und von der zweiten Richtung unterscheidet, wobei Auslassöffnungen der ersten, zweiten und dritten seismischen Quelle in voneinander unterschiedliche Richtungen gerichtet sind.

5. System nach Anspruch 4, wobei eine Zeit zwischen dem ersten Zeitpunkt und dem zweiten Zeitpunkt einem Zeitraum entspricht, wobei eine Zeit zwischen dem zweiten Zeitpunkt und dem dritten Zeitpunkt dem Zeitraum entspricht, wobei optional Folgendes gilt: die erste Luftblase, die zweite Luftblase und die dritte Luftblase bilden ein seismisches Wellenfeld, wobei der Zeitraum gewählt wird, um Ghosting-Effekte im seismischen Wellenfeld zu reduzieren; und/oder der vorbestimmte Abstand, der Zeitraum und die Niederfrequenz-Charakteristik werden basierend auf einem oder mehreren von Speisedruck PO, Pistolenvolumen V und Betrieb der Quelle in einer gewählten Tiefe ausgewählt.

6. System nach Anspruch 4, wobei die erste Luftblase, die zweite Luftblase und die dritte Luftblase ein seismisches Wellenfeld bilden, wobei der vorbestimmte Abstand, der Zeitraum und die Niederfrequenz-Charakteristik gewählt werden, um Null-Hertz-Kerbwirkungen im seismischen Wellenfeld zu reduzieren.

7. System nach Anspruch 1, wobei der vorbestimmte Abstand gewählt wird, um Ghosting-Effekte im seismischen Wellenfeld zu reduzieren.

8. System nach Anspruch 1, wobei die erste seismische Quelle dazu konfiguriert ist, in einer gleichen Tiefe innerhalb des seismischen Mediums eingesetzt zu werden, wie die zweite seismische Quelle.

9. Verfahren, Folgendes umfassend:

Veranlassen einer ersten seismischen Quelle (400(1)-(3)) zum Abgeben seismischer Energie durch Generieren einer ersten Luftblase in das seismische Mediu zm in eine erste Richtung zu einem ersten Zeitpunkt; und Veranlassen einer zweiten seismischen Quelle (400(1)-(3)) zum Abgeben seismischer Energie durch Generieren einer zweiten Luftblase in das seismische Medium in eine zweite Richtung zu einem zweiten Zeitpunkt nach dem ersten Zeitpunkt, wobei sich die erste Richtung von der zweiten Richtung unterscheidet, wobei Auslassöffnungen der ersten und der zweiten seismischen Quelle in voneinander unterschiedliche Richtungen gerichtet sind, wobei die zweite seismische Quelle in einem vorbestimmten Abstand zur ersten seismischen Quelle beabstandet ist, wobei die seismische Energie eine Niederfrequenz-Charakteristik aufweist, wobei ein Zeitraum zwischen dem ersten Zeitpunkt und dem zweiten Zeitpunkt basierend auf dem vorbestimmten Abstand, dem seismischen Medium und einem Volumen der ersten und der zweiten Luftblase gewählt wird.

10. Verfahren nach Anspruch 9, wobei die erste Luftblase von der zweiten Luftblase ohne Frequenzsynchronisation beabstandet ist, während die seismische Energie im seismischen Medium generiert wird.

11. Verfahren nach Anspruch 9, wobei die erste Luftblase und die zweite Luftblase ein seismisches Wellenfeld bilden, optional ferner Folgendes umfassend: Wählen des vorbestimmten Abstands zwischen der ersten seismischen Quelle und der zweiten seismischen Quelle, um Ghosting-Effekte im seismischen Wellenfeld zu reduzieren; und/oder Wählen eines Zeitraums zwischen dem ersten Zeitpunkt und dem zweiten Zeitpunkt, des vorbestimmten Abstands und der Niederfrequenz-Charakteristik, um Ghosting-Effekte im seismischen Wellenfeld zu reduzieren; und/oder Wählen des vorbestimmten Abstands, eines Zeitraums zwischen dem ersten Zeitpunkt und dem zweiten Zeitpunkt und der Niederfrequenz-Charakteristik, um Null-Hertz-Kerbwirkungen im seismischen Wellenfeld zu reduzieren.

12. Verfahren nach Anspruch 9, ferner umfassend Verzögern des Abgebens der zweiten Luftblase aus der zweiten seismischen Quelle durch einen vorbestimmten Zeitraum vom ersten Zeitpunkt zum zweiten Zeitpunkt, wobei der Zeitraum gleich einem Zeitunterschied zwischen dem ersten Zeitpunkt und dem zweiten Zeitpunkt ist.

13. Verfahren nach Anspruch 9, wobei die Niederfrequenz-Charakteristik eine Frequenz ist, die geringer ist als eine vorbestimmte Frequenz und/oder wobei das seismische Medium eine Wassersäule ist.

14. Verfahren nach Anspruch 9, ferner umfassend Veranlassen einer dritten seismischen Quelle zum Abgeben seismischer Energie durch Generieren einer dritten Luftblase in das seismische Medium zu einem dritten Zeitpunkt nach dem zweiten Zeitpunkt, wobei die dritte seismische Quelle mit mindestens dem vorbestimmten Abstand sowohl von der ersten seismischen Quelle als auch von der zweiten seismischen Quelle beabstandet ist.

15. Verfahren nach Anspruch 9, ferner umfassend Auswählen des vorbestimmten Abstands, eines Zeitraums zwischen dem ersten Zeitpunkt und dem zweiten Zeitpunkt und der Niederfrequenz-Charakteristik basierend auf einem oder mehreren von Speisedruck PO, Pistolenvolumen V und Betrieb der Quelle in einer gewählten Tiefe, ferner umfassend Einsetzen der ersten und der zweiten seismischen Quelle im seismischen Medium in einer spezifizierten Tiefe.

**Revendications**

1. Système, comprenant :

    une première source sismique (400(1) à (3)) configurée pour émettre de l'énergie sismique par génération d'une première bulle d'air dans le milieu sismique dans une première direction à un premier instant ; et
    une deuxième source sismique (400(1) à (3)) espacée d'une distance prédéfinie de la première source sismique, la deuxième source sismique étant configurée pour émettre de l'énergie sismique par génération d'une deuxième bulle d'air dans le milieu sismique dans une deuxième direction à un deuxième instant après le premier instant, dans lequel la première direction est différente de la deuxième direction, dans lequel des orifices de sortie des première et deuxième sources sismiques sont orientés dans des directions différentes entre elles, dans lequel l'énergie sismique émise par les première et deuxième sources sismiques a une caractéristique basse fréquence, dans lequel une période de temps entre le premier instant et le deuxième instant est sélectionnée sur la base de la distance prédéfinie, du milieu sismique et d'un volume des première et deuxième bulles d'air.

2. Système selon la revendication 1, dans lequel la première bulle d'air est espacée de la deuxième bulle d'air sans verrouillage de fréquence, tout en générant l'énergie sismique dans le milieu sismique et/ou dans lequel la première bulle d'air et la deuxième bulle d'air forment un champ d'ondes sismiques.

**3.** Système selon la revendication 1, dans lequel la caractéristique basse fréquence est une fréquence qui est inférieure à une fréquence prédéfinie et/ou dans lequel le milieu sismique est une colonne d'eau.

**4.** Système selon la revendication 1, comprenant en outre une troisième source sismique espacée d'une distance prédéfinie de la première source sismique et de la deuxième source sismique, la troisième source sismique étant configurée pour émettre de l'énergie sismique par génération d'une troisième bulle d'air dans le milieu sismique dans une troisième direction à un troisième instant après le deuxième instant, dans lequel la troisième direction est différente de la première direction et différente de la deuxième direction, dans lequel des orifices de sortie des première, deuxième et troisième sources sismiques sont orientés dans des directions différentes entre elles.

**5.** Système selon la revendication 4, dans lequel un instant entre le premier instant et le deuxième instant est égal à une période de temps, dans lequel un instant entre le deuxième instant et le troisième instant est égal à la période de temps, éventuellement dans lequel : la première bulle d'air, la deuxième bulle d'air et la troisième bulle d'air forment un champ d'ondes sismiques, dans lequel la période de temps est sélectionnée pour réduire des effets fantômes dans le champ d'ondes sismiques ; et/ou la distance prédéfinie, la période de temps et la caractéristique basse fréquence sont sélectionnées sur la base d'un ou de plusieurs éléments parmi la pression de charge PO, le volume de canon V et le fonctionnement de la source à une profondeur sélectionnée.

**6.** Système selon la revendication 4, dans lequel la première bulle d'air, la deuxième bulle d'air et la troisième bulle d'air forment un champ d'ondes sismiques, dans lequel la distance prédéfinie, la période de temps et la caractéristique basse fréquence sont sélectionnées pour réduire des effets d'encoche de zéro hertz dans le champ d'ondes sismiques.

**7.** Système selon la revendication 1, dans lequel la distance prédéfinie est sélectionnée pour réduire des effets fantômes dans le champ d'ondes sismiques.

**8.** Système selon la revendication 1, dans lequel la première source sismique est configurée pour être déployée à une même profondeur dans le milieu sismique que la deuxième source sismique.

**9.** Procédé, comprenant :

le fait d'amener une première source sismique (400(1) à (3)) à émettre de l'énergie sismique par génération d'une première bulle d'air dans le milieu sismique dans une première direction à un premier instant ; et
le fait d'amener une deuxième source sismique (400(1) à (3)) à émettre de l'énergie sismique par génération d'une deuxième bulle d'air dans le milieu sismique dans une deuxième direction à un deuxième instant après le premier instant, dans lequel la première direction est différente de la deuxième direction, dans lequel des orifices de sortie des première et deuxième sources sismiques sont orientés dans des directions différentes entre elles, dans lequel la deuxième source sismique est espacée de la première source sismique d'une distance prédéfinie, dans lequel l'énergie sismique a une caractéristique basse fréquence, dans lequel une période de temps entre le premier instant et le deuxième instant est sélectionnée sur la base de la distance prédéfinie, du milieu sismique et du volume des première et deuxième bulles d'air.

**10.** Procédé selon la revendication 9, dans lequel la première bulle d'air est espacée de la deuxième bulle d'air sans verrouillage de fréquence, tout en générant l'énergie sismique dans le milieu sismique.

**11.** Procédé selon la revendication 9, dans lequel la première bulle d'air et la deuxième bulle d'air forment un champ d'ondes sismiques comprenant éventuellement en outre : la sélection de la distance prédéfinie entre la première source sismique et la deuxième source sismique pour réduire des effets fantômes dans le champ d'ondes sismiques ; et/ou la sélection d'une période de temps entre le premier instant et le deuxième instant, de la distance prédéfinie et de la caractéristique basse fréquence pour réduire des effets fantômes dans le champ d'ondes sismiques ; et/ou la sélection de la distance prédéfinie, d'une période de temps entre le premier instant et le deuxième instant et de la caractéristique basse fréquence pour réduire des effets d'encoche de zéro hertz dans le champ d'ondes sismiques.

**12.** Procédé selon la revendication 9, comprenant en outre le retardement de l'émission de la deuxième bulle d'air à partir de la deuxième source sismique d'une période de temps prédéfinie allant du premier instant au deuxième instant, dans lequel la période de temps est égale à une différence de temps entre le premier instant et le deuxième instant.

**13.** Procédé selon la revendication 9, dans lequel la caractéristique basse fréquence est une fréquence qui est inférieure à une fréquence prédéfinie et/ou dans lequel le milieu sismique est une colonne d'eau.

**14.** Procédé selon la revendication 9, comprenant en outre le fait d'amener une troisième source sismique à émettre de l'énergie sismique par génération d'une troisième bulle d'air dans le milieu sismique un troisième instant après le deuxième instant, dans lequel la troisième source sismique est espacée d'au moins la distance prédéfinie à la fois de la première source sismique et de la deuxième source sismique.

**15.** Procédé selon la revendication 9, comprenant en outre la sélection de la distance prédéfinie, d'une période de temps entre le premier instant et le deuxième instant et de la caractéristique basse fréquence sur la base d'un ou de plusieurs éléments parmi la pression de charge PO, le volume de canon V et le fonctionnement de la source à une profondeur sélectionnée, comprenant en outre le déploiement des première et deuxième sources sismiques dans le milieu sismique à une profondeur spécifiée.

*FIG.1*

EP 3 788 409 B1

FIG.2

FIG. 3

FIG. 4A

500

400(1)

400(2)

*FIG. 4B*

400(1)

500

400(2)

400(3)

*FIG. 4C*

604

600

610

Depressor
(Weight or Down force Sailwing)

Multi-SourceSteeringDevice
UsingSailWingsforLateralForce

620

630

500(3)

500(4)

500(1)

500(2)

FIG.5

EP 3 788 409 B1

Multi-SourceSteeringDevice
UsingSailWingsforLateralForce

601

610

620

630

400(1)

400(2)

400(3)

400(4)

604

Depressor
(Weight or Down force Sailwing)

FIG.6

700

SINGLE (NON-CLUSTER) AIRGUN SEPARATION EXAMPLE

Y DIST

Y1

700(1)   700(2)   700(3)

X1       X2       X3

X DIST

*FIG.7*

EP 3 788 409 B1

**EP 3 788 409 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62666057
- US 6539308 B, Monk
- US 8830766 B, Lambert
- US 2011211422 A
- WO 2016153353 A
- EP 2416179 A
- US 9632195 B
- US 2016057344 W
- WO 2017066762 A
- US 959009
- WO 20160161622 A
- WO 2017000209 W
- WO 2017141111 A